# EUROPÄISCHE PATENTANMELDUNG

(11) **EP 0 704 348 A1**
(43) Veröffentlichungstag der Anmeldung: **03.04.1996**
(21) Anmeldenummer: 95114161.3
(22) Anmeldetag: 09.09.1995
(51) Int. Cl.: B60R 21/26, F42B 3/12

(54) **Anzündeinheit für einen Gasgenerator eines passiven Rückhaltesystems**

(30) Priorität: 01.10.1994 DE 4435319
(71) Anmelder: TEMIC Bayern-Chemie Airbag GmbH, D-84544 Aschau (DE)
(72) Erfinder: Fink, Otto, D-84577 Tüssling (DE); Vetter, Bernhard, D-83052 Bruckmühl (DE)
(74) Vertreter: Maute, Hans-Jürgen, Dipl.-Ing.

(57) **Zusammenfassung**

Gasgeneratoren für passive Sicherheitssysteme von Kraftfahrzeugen, insbesondere Airbag-Systeme oder Gurtstraffer-Systeme, enthalten eine gaserzeugende Masse, die ihrerseits von einer elektrischen Anzündeinheit entzündet wird. Beschrieben wird eine Anzündeinheit, die erfindungsgemäß auf wenig Einzelteilen und ohne die Verwendung eines Steckers auskommt. Hierzu werden die den elektrischen Zündimpuls zuführenden Anschlußmittel direkt mit der Anzündladung ohne Zwischenschaltung eines Steckers verbunden und der Anzündträger als Umpressung der Anschlußmittel ausgebildet.

## Beschreibung

Die Erfindung betrifft eine Anzündeinheit für einen Gasgenerator eines passiven Rückhaltesystems, insbesondere für Kraftfahrzeuge gemäß dem Oberbegriff des Patentanspruches 1.

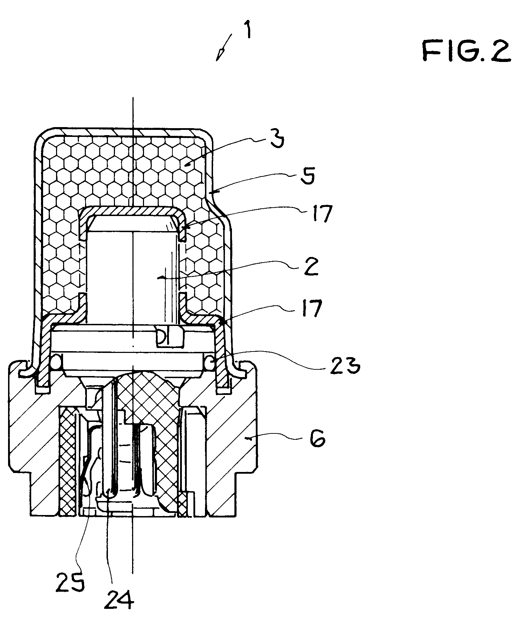

Eine solche Anzündeinheit ist bekannt und in Figur 2 dargestellt und besteht im wesentlichen aus folgenden Teilen: einem elektrischen Anzünder 2, der die eigentliche Anzündladung enthält, einer Treibladungshülse 5 zur Aufnahme eines Treibladungspulvers 3 und einem Anzündträger 6, der den elektrischen Anzünder 2 als auch die befüllte Treibladungshülse 5 trägt und miteinander verbindet. Dem elektrischen Anzünder 2 werden über Steckerstifte 24 mittels eines nicht dargestellten Steckers die Zündimpulse zugeführt, wobei diese Steckerstifte 24 durch den Anzündträger 6 geführt sind. Hierzu weist der sockelförmig ausgebildete Anzündträger 6 eine Zentrumsöffnung auf, in die der die Steckerstifte 24 tragende Teil des elektrischen Anzünders 2 eingepaßt ist. Über den die eigentliche Anzündladung (Zündpille) enthaltenden Teil des elektrischen Anzünders 2 ist eine innere Verdämmhülse 17 aus Metall gestülpt, die mit ihrem freien Rand in eine umlaufende Nut im Anzündträger 6 eingepreßt wird. Der die Anzündladung tragende zylindrische Teil des elektrischen Anzünders 2 besteht aus Kunststoff und dient gleichzeitig als Verdämmung. Die Anordnung aus Anzündträger 6 mit dem elektrischen Anzünder 2 und der inneren Verdämmungshülse 17 ragt nun in eine mit Treibladungspulver 3 gefüllte Treibladungshülse 5. Diese Treibladungshülse 5 schließt im Bereich des Randes formschlüssig mit der inneren Verdämmungshülse 17 ab, wobei deren Rand in einer durch Umbördelung am Anzündträger 6 erzeugten umlaufenden Nut eingreift, um hierdurch die notwendige Befestigung zu erreichen. Um ein Eindringen von Feuchtigkeit zu verhindern, ist im Bereich zwischen dem elektrischen Anzünder 2, dem Anzündträger 6 und der inneren Verdämmungshülse 17 ein Dichtungsring 23 vorgesehen.

Schließlich ist im Bereich der Steckerstifte 24 eine Kurzschlußfeder 25 vorgesehen, um eine unbeabsichtigte Zündung aufgrund elektrostatischer Aufladungen zu verhindern.

Die bekannte Anzündeinheit 1 nach Figur 2 besteht aus einer großen Anzahl von Einzelteilen, die eine aufwendige Montage erfordern, mit der Folge hoher Herstellungskosten einer solchen Anzündeinheit. Kostenmäßig fällt insbesondere der für die Zuführung des elektrischen Zündimpulses erforderliche Stecker ins Gewicht, da dieser aufgrund hoher Sicherheitsanforderungen im Steckerkontaktbereich eine galvanische Beschichtung aufweisen muß.

Die Aufgabe der Erfindung liegt daher darin, eine Anzündeinheit der eingangs genannten Art anzugeben, die gegenüber der bekannten Anzündeinheit weniger Einzelteile aufweist, insbesondere keinen Stecker zur Zuführung eines elektrischen Zündimpulses erfordert.

Diese Aufgabe wird durch die kennzeichnenden Merkmale des Patentanspruches 1 gelöst. Hiernach sind die Anschlußleitungen mit dem die Anzündladung tragenden Brückendrahtträger unlösbar verbunden und der Anzündträger als Umpressung der Anschlußleitungen und des Brückendrahtträgers derart ausgebildet, daß auf der zur Treibladungshülse gewandten Seite des Anzündträgers die Anzündladung aus dem Anzündträger ragt und auf der zur Treibladungshülse abgewandten Seite des Anzündträgers die Anschlußleitungen aus dem Anzündträger herausgeführt sind.

Das Wesen der Erfindung besteht somit darin, anstatt einem elektrischen Anzünder und einem hiervon getrennten Anzündträger ein einziges Bauteil, nämlich einen Anzündträger mit integrierten Leitungsmitteln zu schaffen, das sowohl die Anzündladung als auch den Leitungsabgang beinhaltet, so daß diese Leitungen direkt mit dem Auslösegerät für das passive Rückhaltesvstem verbunden werden können. Somit wird eine Reduzierung der Kosten durch eine geringere Anzahl der Einzelteile, insbesondere durch den Wegfall eines elektrischen Steckers erzielt.

Der erfindungsgemäße Anzündträger kann aus spritzgußtechnisch geformtem Kunststoff bestehen, wobei die Anschlußleitungen über eine Schweißverbindung mit dem Brückendrahtträger verbunden sein können.

Die Verbindung der Treibladungshülse mit dem Anzündträger erfolgt bei einer vorteilhaften Weiterbildung der Erfindung dadurch, daß der Anzündträger einen Randbereich aufweist, über den die Treibladungshülse gestülpt wird und in diesem Randbereich eine Bördelnut für die Treibladungshülse vorgesehen ist. Der Randbereich kann dabei so ausgebildet sein, daß zusammen mit der Treibladungshülse ein Preßsitz entsteht. Anstatt eines Preßsitzes kann die Verbindung auch durch Klebung oder Ultraschallschweißung erfolgen.

Alternativ kann die Befestigung der Treibladungshülse mit dem Anzündträger so ausgeführt werden, daß die Treibladungshülse ebenfalls über den Randbereich des Anzündträgers unter Bildung eines Preßsitzes gestülpt wird, wobei der Anzündträger einen umlaufenden Wulst aufweist, an den der nach außen abgekantete Rand der Treibladungshülse anliegt und ein für die Anzündeinheit vorgesehenes Druckrohr eines Gasgenerators im Bereich des Wulstes so ausgebildet ist, daß der Wulst zusammen mit dem abgekanteten Rand in einer in dem Druckrohr gebildeten Stufe anliegt und zusammen mittels einer Umbördelung einen Verdämmungsverband bildet. Anstelle eines Preßsitzes kann auch eine Klebung oder eine Ultraschallschweißung durchgeführt werden.

Weiterhin kann bei einer vorteilhaften Ausführungsform der Erfindung eine innere Verdämmungshülse so angeordnet werden, daß im Bereich des Austrittes des Brückendrahtträgers ein Sockel an den Anzündträger angeformt ist und der Sockel sowie diese innere Verdämmungshülse Rastmittel aufweisen, so daß diese beim Überstülpen der inneren Verdämmungshülse auf diesen Sockel die Rastmittel ineinander einrasten und somit eine formschlüssige Verbindung hergestellt wird. Vorzugsweise sind als Rastmittel an dem Sockel eine umlaufende Rastnut und am inneren Rand der inneren Verdämmungshülse ein umlaufender Wulst vorgesehen.

Schließlich ist bei einer anderen vorteilhaften Weiterbildung der Erfindung eine becherförmige Befüllhülse vorgesehen, deren Boden eine Bohrung mit einem Durchmesser aufweist, der dem äußeren Durchmesser der inneren Verdämmungshülse entspricht, wobei diese Befüllhülse so angeordnet ist, daß die innere Verdämmungshülse in diese Befüllhülse ragt. Damit wird in vorteilhafter Weise die innere Verdämmhülse radial abgestützt, damit diese bei einer Zündung nicht aus der Rastnut gedrückt wird. Ferner führt eine solche Befüllhülse zu einem fertigungstechnischen Vorteil, da die Befüllung der Anzündeinheit mit Treibladungspulver in einer Position durchgeführt werden kann, in der die Leitungsabgänge nach unten hängen.

Vorzugsweise kann die Befüllhülse so ausgestaltet sein, daß deren äußerer Durchmesser dem inneren Durchmesser der Treibladungshülse entspricht.

Schließlich kann als EMV-Schutz ein Ferritkern im Bereich der Anschlußleitungen vorgesehen werden, der gleichzeitig mit den Anschlußmitteln zur Bildung des Anzündträgers umpresst wird.

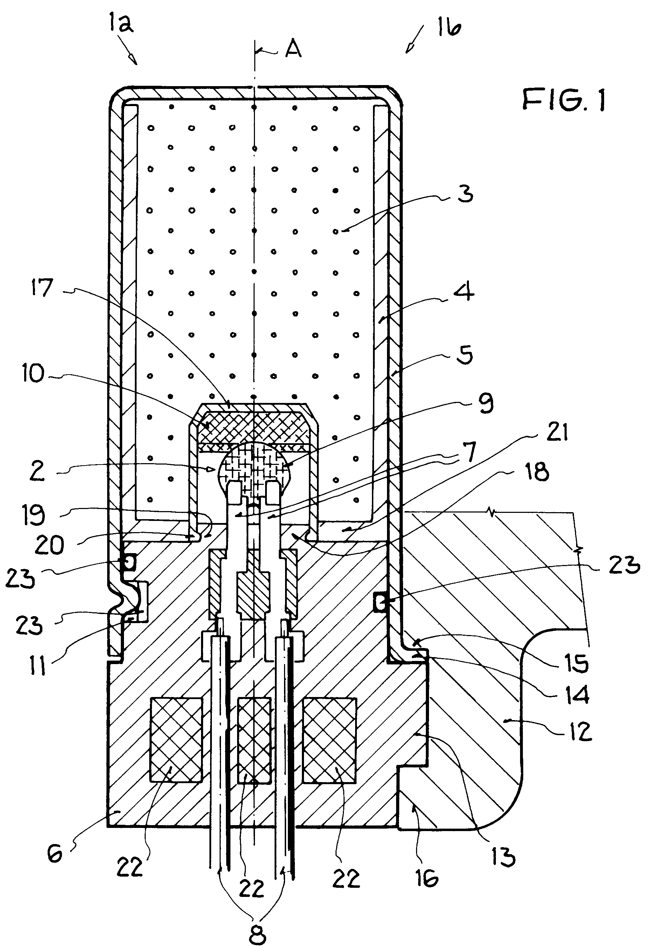

Im folgenden soll die Erfindung anhand eines Ausführungsbeispieles im Zusammenhang mit der Figur 1 dargestellt und erläutert werden.

Die Anzündeinheit nach Figur 1 zeigt einen Anzündträger 6 mit integrierten Anschlußmitteln für eine aus einer Primärladung 9 und einer Sekundärladung 10 bestehenden Anzündladung. Diese Anschlußmittel bestehen aus einem direkt mit der Primärladung (auch Zündpille genannt) verbundenen Brückendrahtträger 9 und mit diesem über eine Schweißverbindung in Kontakt stehenden Anschlußleitungen 8. Gleichzeitig nimmt dieser Anzündträger 6 als EMV-Schutz auch einen Ferritkern 22 auf, der im Bereich der Anschlußleitungen 8 angeordnet ist. Dieser Anzündträger 6 wird als Umpressung der Anschlußmittel 7 und 8 als auch des Ferritkernes 22 ausgeführt, beispielsweise mittels eines Spritzgußverfahrens.

Im Bereich der aus dem Anzündträger 6 herausragenden Brückendrahtträger 7 ist ein Sockel 18 angeformt, der zur Verbindung einer über die Primär- und Sekundärladung (fuse head) 7 und 8 gestülpten inneren Verdämmungshülse 17 dient. Hierzu dient eine am Sockel 18 umlaufende Rastnut sowie eine am freien, inneren Rand der inneren Verdämmungshülse 17 ebenfalls umlaufende Rastnut, die beim überstülpen auf den Sockel 18 in dessen Rastnut 19 einrastet.

Zur Aufnahme eines Treibladungspulvers 3 ist eine gleichzeitig als äußere Verdämmhülse dienende Treibladungshülse 5 vorgesehen, die becherförmig ausgebildet ist. Zur Befestigung dieser Treibladungshülse 5 ist der Anzündträger 6 im Bereich der inneren Verdämmungshülse 17 zylinderförmig ausgebildet, so daß der Durchmesser dieses zylinderförmigen Ansatzes dem inneren Durchmesser der Treibladungshülse 5 entspricht. Somit kann diese Treibladungshülse 5 auf den zylinderförmigen Ansatz unter Bildung eines Preßsitzes, einer Klebverbindung oder einer Ultraschallschweißverbindung gestülpt werden, wobei zur Fixierung der Treibladungshülse 5 gemäß Figur 1 zwei Ausführungsbeispiele dargestellt sind.

So ist links der Symmetrieachse A eine Anzündeinheit 1a und rechts der Symmetrieachse A eine Anzündeinheit 1b dargestellt. Bei der Anzündeinheit 1a wird die Fixierung der Treibladungshülse 5 mittels einer in dem zylinderförmigen Ansatz des Anzündträgers 6 angeordneten Bördelnut erzielt, wobei gleichzeitig in diese Bördelnut 11 ein Dichtring 23 eingelegt wird. Ein weiterer Dichtring 23 liegt im benachbarten Bereich der Bördelnut 11.

Die Fixierung der Treibladungshülse 5 bei der Anzündeinheit 1b erfolgt dagegen in anderer Weise. Hierzu dient ein an den zylinderförmigen Ansatz sich anschließender, kreisförmig umlaufender Wulst 13, der als Anschlag für die Treibladungshülse 5 dient. Hierzu wird der äußere Rand der Treibladungshülse 5 rechtwinklig abgekantet, so daß sich die hierdurch gebildete Abkantung an die durch den Wulst 13 gebildete Stufe anpaßt. Beim Einführen der Anzündeinheit 1b in eine als Druckrohr 12 ausgebildete Brennkammer stößt die durch die Abkantung 14 gebildete Stufe an eine in der Druckrohrwand gebildete Stufe 15. Nun wird mittels einer Umbördelung 16 die noch durch den Wulst 13 gebildete freie Stufe umbördelt. Schließlich ist zur Sicherstellung der Dichtigkeit im Bereich des zylinderförmigen Ansatzes des Anzündträgers 6 ebenfalls ein Dichtring 23 vorgesehen.

Schließlich ist bei der erfindungsgemäßen Anzündeinheit 1a bzw. 1b eine Befüllhülse 4 vorgesehen, die becherförmig mit einer Öffnung im Bodenbereich 21 ausgebildet ist. Der Durchmesser dieser Öffnung im Bodenbereich 21 entspricht dem äußeren Durchmesser der inneren Verdämmungshülse 17. Somit kann diese Befüllhülse 4 über die innere Verdämmungshülse 17 geschoben werden, bis deren Bodenbereich 21 an dem Anzündträger 6 anliegt. Der äußere Durchmesser dieser Befüllhülse 4 entspricht dem inneren Durchmesser der Treibladungshülse 5, so daß diese formschlüssig miteinander verbunden sind.

Diese Befüllhülse 4 hat den Vorteil, daß sie die innere Verdämmhülse 17 radial abstützt, so daß bei einer Zündung diese nicht aus der Rastnut 19 gedrückt wird. Des weiteren wird die Montage der Anzündeinheit 1a bzw. 1b vereinfacht, da beim Befüllen mit Treibladungspulver 3 die Anzündeinheit so gelagert werden kann, daß die Anschlußleitungen 8 nach unten hängen.

Wie schon oben ausgeführt, besteht der Anzündträger 6 aus Kunststoff, insbesondere aus ...... Das Material der äußeren Verdämmhülse 5, der inneren Verdämmhülse 17, wie der Befüllhülse 4 sind aus Kunststoff hergestellte Spritzteile oder sind aus Metall als Tiefziehteile hergestellt.

## Patentansprüche

1. Anzündeinheit (1a, 1b) für einen Gasgenerator eines passiven Rückhaltesystems, insbesondere für Kraftfahrzeuge, bestehend aus einem elektrischen Anzünder (2) mit Anschlußmitteln (8), wobei der elektrische Anzünder (2) einen die Anzündladung (9, 10) tragenden Brückendrahtträger (7) umfaßt und in eine mit Treibladungspulver (3) gefüllte Treibladungshülse (5) ragt, und einem die Treibladungshülse (5) verschließenden Anzündträger (6), durch den die Anschlußmittel (8) geführt sind, gekennzeichnet durch folgende Merkmale:
a) es sind Anschlußleitungen (8) vorgesehen, die unlösbar mit dem Brückendrahtträger (7) verbunden sind und
b) der Anzündträger (6) ist als Umpressung der Anschlußleitungen (8) und des Brückendrahtträgers (7) derart ausgebildet, daß auf der zur Treibladungshülse (5) gewandten Seite des Anzündträgers (6) der Brückendrahtträger (7) aus dem Anzündträger (6) ragt und auf der zur Treibladungshülse (5) abgewandten Seite des Anzündträgers (6) die Anschlußleitungen (8) aus dem Anzündträger (6) herausgeführt sind.

2. Anzündeinheit (1a, 1b) nach Anspruch 1, dadurch gekennzeichnet, daß zur Befestigung der Treibladungshülse (5) mit dem Anzündträger (6) dieser einen Randbereich aufweist, über den die Treibladungshülse (5) gestülpt wird und daß in diesem Randbereich der Anzündträger (6) eine Bördelnut (11) aufweist.

3. Anzündeinheit (1a, 1b) nach Anspruch 1 mit einem die Anzündeinheit aufnehmenden Druckrohr (12) eines Gasgenerators, dadurch gekennzeichnet, daß zur Befestigung der Treibladungshülse (5) mit dem Anzündträger (6) dieser einen Randbereich aufweist, über den die Treibladungshülse gestülpt wird und daß der Anzündträger (6) einen umlaufenden Wulst (13) aufweist, an dem der nach außen abgekantete Rand (14) der Treibladungshülse (5) anliegt und daß das Druckrohr (12) im Bereich des Wulstes (13) so ausgebildet ist, daß der Wulst (13) zusammen mit dem abgekanteten Rand (14) mittels einer Stufe (18) und einer Umbördelung (16) einen Verdämmungsverbund bildet.

4. Anzündeinheit (1a, 1b) nach einem der vorangehenden Ansprüche mit einer inneren Verdämmungshülse (17), dadurch gekennzeichnet, daß im Bereich des Austrittes des Brückendrahtträgers (7) ein Sockel (18) an den Anzündträger (6) angeformt ist, daß an diesen Sockel (18) und an der inneren Verdämmungshülse (17) Rastmittel (19, 20) derart angebracht sind, daß beim Überstülpen der inneren Verdämmungshülse (17) auf den Sockel (18) die Rastmittel (19, 20) zur formschlüssigen Verbindung ineinander einrasten.

5. Anzündeinheit (1a, 1b) nach Anspruch 4, dadurch gekennzeichnet, daß als Rastmittel an dem Sockel (18) eine umlaufende Rastnut (19) und am inneren Rand der inneren Verdämmungshülse (17) ein umlaufender Wulst (20) vorgesehen sind.

6. Anzündeinheit (1a, 1b) nach Anspruch 4 oder 5, dadurch gekennzeichnet, daß eine becherförmige Befüllhülse (4) vorgesehen ist, deren Boden (21) eine Bohrung aufweist, deren Durchmesser dem äußeren Durchmesser der inneren Verdämmungshülse (17) entspricht und daß die Befüllhülse (4) so angeordnet ist, daß die Verdämmungshülse (17) in die Befüllhülse (4) ragt.

7. Anzündeinheit (1a, 1b) nach Anspruch 6, dadurch gekennzeichnet, daß der äußere Durchmesser der Befüllhülse (4) dem inneren Durchmesser der Treibladungshülse (5) entspricht.

8. Anzündeinheit (1a, 1b) nach einem der vorangehenden Ansprüche, dadurch gekennzeichnet, daß der Anzündträger (6) Ferritkerne enthält, die im Bereich der Anschlußleitungen (8) angeordnet sind.
